# EUROPEAN PATENT APPLICATION

(11) **EP 4 400 193 A1**
(43) Date of publication of application: **17.07.2024**
(21) Application number: 22853594.4
(22) Date of filing: 15.04.2022
(51) Int. Cl.: B01D 27/02, B01D 24/10, B01D 24/12

(54) **FILTER MODULE**

(30) Priority: 05.08.2021 RU 2021123396
(71) Applicant: Aquaphor Corporation (Aquaphor Corp.), St.Petersburg 197110 (RU)
(72) Inventor: SHMIDT, Joseph, L., New York, 11598 (US); CHERNYI, Alexander Alexandrovich, Saint-Petersburg, 195252 (RU); SURZHENKO, Dmitriy Andreevich, Saint-Petersburg, 195253 (RU)
(74) Representative: Danubia Patent & Law Office LLC
(86) International application number: PCT/RU2022/000125
(87) International publication number: WO 2023/014243

(57) **Abstract**

The invention relates to a filtration cartridge for gravity-type liquid purification devices intended for use in domestic conditions, in summer cottages and gardens for purification or post-purification of liquids, mainly water, for domestic and/or drinking water supply and other liquids for domestic use. The filtration cartridge consisting of a housing filled with a mixture, wherein at the top of the housing there is at least one opening for water inlet, and at the bottom there is at least one opening for water outlet, characterized in that said filtration cartridge is designed to reduce the degree of contamination of the purified liquid with foreign particles and particles of filter material, and equipped with a protective element.

## Description

The invention relates to a filtration cartridge for gravity-type liquid purification devices intended for use in domestic conditions, in summer cottages and gardens for purification or post-purification of liquid, mainly water, for domestic and/or drinking water supply and other liquids for domestic use.

Filtration cartridges for gravity-type liquid purification devices are widely known from the state of the art. Known designs of gravity-type liquid purification devices include, as a rule, three elements: a container for the raw liquid and a container for the purified liquid, which communicates with each other through a filtration cartridge. The raw liquid is poured into a container for the raw liquid; by the action of gravity the raw liquid flows through the filtration cartridge, where the liquid purification process occurs; the purified liquid accumulates in the container for the purified liquid, from where it can be taken for consumption.

A filtration cartridge according to the patent for a liquid purification device of the RU 2715187 [priority 01/26/2015, Applicant Brita GMBH, IPC C02F 1/00; B01D 27/00; F16K 21/00] is known from the state of the art. The filtration cartridge consists of a housing filled with filter material, where in the upper part there is at least one inlet for liquid inlet and air outlet, and in the lower part there is an outlet for purified liquid. RU271587 patent claims two embodiments of the filtration cartridge, differing in the design of the lower part of the cartridge housing. The first embodiment of the filtration cartridge has a recess in the center of the lower part with a hollow protruding part. Inside the protruding part there are elongated protrusions with threads. The second embodiment of the filtration cartridge has only a protrusion in the lower part in the center. On the sides from the center of the lower part, in both embodiments, there are two holes in the bottom of the cartridge for the outlet of purified liquid, covered with a mesh. In the container for the raw liquid of the liquid purification device according to patent RU2715187, there is a seat for the filtration cartridge, which is equipped with a valve, a movable valve element, which are the counterpart to the protrusions in the lower part of the filtration cartridge. As part of its distinctive features, the filtration cartridge according to RU2715187 operates as follows. The filtration cartridge is installed in the seat of the container for the raw liquid of the liquid purification device. In this case, for the first embodiment of the filtration cartridge, the movable valve element rotates, opening access to the purified liquid, and a channel is formed by the side wall of the recess, the side wall of the protruding part of the cartridge and the inner wall of the seat of the container for the raw liquid. For the second embodiment of the filtration cartridge, before installing the filtration cartridge in the seat of the container for the raw liquid, an adapter is installed above the movable valve element, which ensures that the valve opens, and the purified liquid can flow out into the container for the purified liquid. After installing the filtration cartridge into the raw liquid container, the raw liquid container is filled with the raw liquid. Under the influence of gravitational forces, the raw liquid flows through the filtration cartridge, where the liquid is purified using the filtration materials with which the housing is filled. In this case, the raw liquid flows into the inlet in the upper part of the filtration cartridge and flows out into the outlet in the lower part of the filtration cartridge. If the filtration cartridge is installed correctly in the container for the raw liquid, then the purified liquid flowing from the filtration cartridge through the outlet hole in the lower part of the housing, through the channel formed by the elements of the filtration cartridge housing and the container for the raw liquid, or through an adapter, enters the container for the purified liquid, where it accumulates and from where it can be taken for consumption. In this case, when flowing from the outlet of the filtration cartridge to the channel or adapter, the purified liquid washes the lower part of the filtration cartridge housing. In this case, particles of filter material enter the purified liquid, which, during production, transportation or during installation, fall out through the outlet hole from inside the housing and cling to the lower part of the housing. In addition, there may be dust on the bottom of the filtration cartridge housing. Also, dust particles may be present on the walls of the container for the raw liquid. Since the design of the filtration cartridge does not provide protective elements, particles of filter material or dust can be washed off from the bottom of the filtration cartridge housing or from the container for the original liquid with purified liquid into the container for purified liquid. Thus, the purified liquid may contain particles of filter material or dust, which is the main disadvantage of this filtration cartridge.

A filtration cartridge according to RU2437703 (priority 06/15/2010, Applicant Aquaphor LLC, IPC B01D 27/02, C02F 1/00), is known from the prior art and chosen by the applicant as the closest analogue. The filtration cartridge consists of a housing filled with filter material. In this case, the body is formed from two parts - the upper part or cover and the lower part. The upper part is made with at least one inlet hole for liquid inlet and air outlet. A bottom is formed in the lower part of the housing, which is made with two side walls inclined to the central axis of symmetry of the filtration cartridge housing, and one upper surface protruding towards the upper part of the filtration cartridge. In this case, the lower part of the housing is made with outlet openings for purified liquid. As part of its distinctive features, the filtration cartridge according to RF patent 2437703 works as follows. The filtration cartridge is inserted into the raw liquid container of the liquid purification device. In this case, a cavity for liquid is formed, limited by the lower part of the filtration cartridge housing and the container for the raw liquid. After installing the filtration cartridge, the container is filled with the raw liquid. The raw liquid, through the inlet hole in the upper part of the filtration cartridge housing, enters the filtration cartridge, where due to the interaction of the liquid with the filtration material, the liquid is purified. The purified liquid flows out of the filtration cartridge through the outlet in the lower part of the housing. After this the purified liquid enters a container for purified liquid, where it accumulates and from where it can be taken for consumption. In this case, the liquid flowing from the outlet of the filtration cartridge before entering the container for the purified liquid flows through the cavity for the liquid, limited by the lower part of the filtration cartridge housing and the container for the raw liquid. In this case, particles of filter material enter the purified liquid, which, during production, transportation or during installation, fall out through the outlet hole from inside the housing and cling to the lower part of the housing. In addition, there may be dust on the bottom of the filtration cartridge housing. Since the design of the filtration cartridge does not provide protective elements, particles of filter material or dust can be washed off from the bottom of the housing by the purified liquid into the container for the purified liquid. Thus, the purified liquid may contain particles of filter material or dust, which is the main disadvantage of the specified filtration cartridge, chosen by the applicant as the closest analogue.

The objective of the invention and the required technical result achieved with its use is to develop a new filtration cartridge and increase the degree of protection of the purified liquid from foreign particles.

The stated task and the required technical result are achieved by the fact that the filtration cartridge, consisting of a housing filled with a mixture, where at the top of the housing there is at least one hole for water inlet, and at the bottom, at least one hole for water outlet is made with the ability to reduce the degree contamination of the purified liquid with foreign particles and particles of filtration material and is equipped with a protective element, wherein the protective element is made in the form of partitions located in an ellipse or a circle, and the partitions can be made of different widths, and the partitions can be located at different distances from each other, preferably from 0.1 to 2 times the width of the partition.

### Brief description of drawings

Figure 1 shows an example of a filtration cartridge in which the bottom of the housing is made flat.
Figure 2 shows an example of a filtration cartridge in which the bottom of the housing is made with a recess.

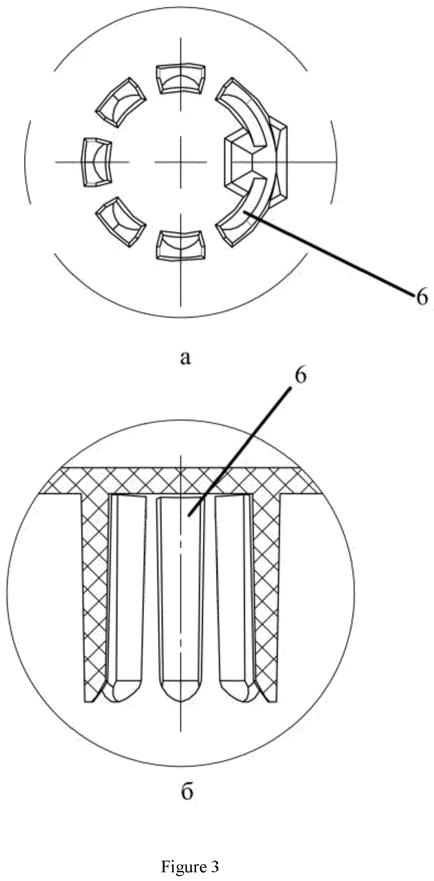

Figure 3 shows an example of the external view of a protective element in two projections - figure 3a shows a top view, figure 3b shows a side view.

The filtration cartridge consists of a housing 1 filled with filtration material 2.

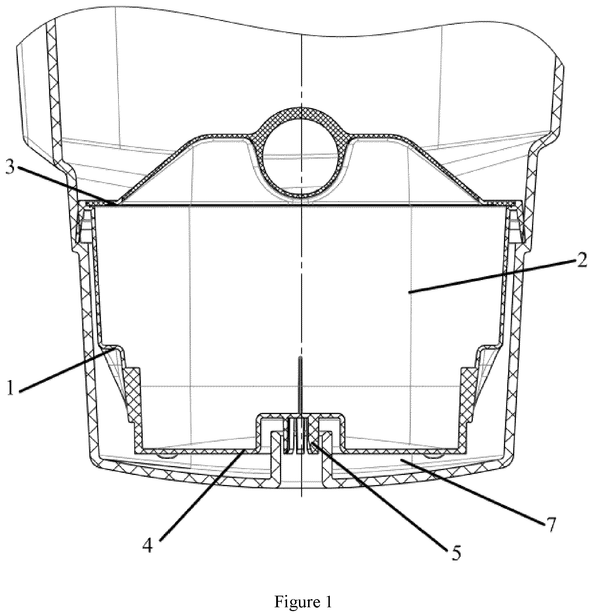

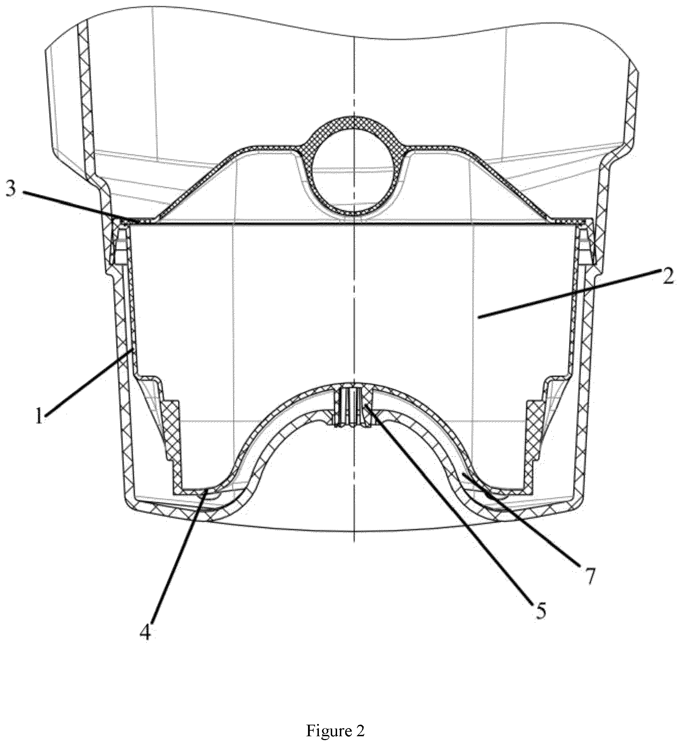

The housing 1 is made of a polymer material, for example polyolefins. The housing 1 can be made either as a single unit or preferably consisting of at least two parts connected to each other. In the upper part of the housing 1 there is at least one hole 3 for the entrance of the raw liquid. The lower part of the housing 1 can be made, for example, but not limited to the listed options, flat (Fig. 1) or concave inwards (Fig. 2). At the bottom of the cartridge housing 1 there is at least one hole 4 for the outlet of purified liquid. The openings 3 and 4 can be made in the form, for example, of slots of various shapes and sizes, and can be additionally equipped with a mesh or lattice, or a porous element made of sintered polyolefin, which reduces the likelihood of the filter material 2 falling out of the housing 1, for example, during transportation. Additionally, the housing 1 can be equipped with a removable or integral sealing collar (not indicated in the figures) made of the same material as the housing 1 and/or sealing elements made of a soft polymer, for example rubber or silicone.

The filtration material 2 can be made in the form of a fibrous or granular sorbent, for example, activated carbon, ion-exchange resin, ion-exchange fiber, or in the form of a mixture of sorbents; the filter material can also be a non-woven sorption material.

In the lower part of the housing 1 there is a protective element 5. The protective element 5 is located preferably in the central part of the bottom of the housing 1, for example, in the area of intersection of the axes of symmetry, or be shifted relative to the point of intersection of the axes of symmetry, while the distance from the center of the protective element 5 to the intersection point the axes of symmetry of the housing 1 are preferably less than the distance from the center of the protective element 5 to the edge of the bottom of the housing 1 (the point at which the side edges begin to form). The protective element 5 consists of partitions 6, located, for example, but not limited to the listed options, in an ellipse or in a circle, or along a polyhedron, where the center of the figure is the center of the protective element 5. The partitions 6 can be made of different widths and located at different distances from each other from friend. The distance between the partitions 6 is preferably from 0.1 to 2 times the width of the partition 6. The partitions 6 can be made of a polymer material, preferably polyolefins. The partitions 6 can be made in one piece with the body 1, or the partitions 6 can be made as a separate part or parts and welded or glued to the body 1.

Within the framework of its distinctive features, the filtration cartridge operates as follows. The filtration cartridge is designed for use in a gravity-type liquid purification device. The filtration cartridge is installed in the raw liquid container of the liquid purification device on the seat available in the raw liquid container. In this case, the side edges of the housing 1 of the filtration cartridge and/or the upper part of the housing 1 of the filtration cartridge are tightly rubbed against the walls of the seat of the container for the raw liquid, thus blocking the flow of the raw liquid bypassing the filtration cartridge. In this case, when the filtration cartridge is installed in the seat of the container for the raw liquid, between the outer wall of the bottom of the housing 1 of the filtration cartridge and the inner wall of the seat of the container for the raw liquid, a channel 7 is formed for the passage of the purified liquid to the outlet of the container for the raw liquid, which when installing the filtration cartridge into the container for the raw liquid it appears inside the space enclosed by the protective element 5.

After installing the filtration cartridge into the seat of the raw liquid container, the raw liquid container is filled with the raw liquid. The raw liquid through at least one hole 3 flows into the housing 1 of the filtration cartridge, where the liquid is purified due to the filtration material 2. The purified liquid flows out of the holes 4, accumulates in channel 7, from where it flows through a hole in the container for the raw liquid into the container for the purified liquid, where it accumulates and can be taken for consumption. In this case, the hole is protected by a protective element 5, and the purified liquid through channel 7 can enter the container for the purified liquid only by flowing between the partitions 6 of the protective element 5. In this case, the purified liquid is mechanically cleaned from foreign particles, such as dust or filter material, that may enter channel 7 from the walls of the container for the raw liquid or housing 1 of the module. That is, foreign particles or particles of filter material are captured by the protective element 5 and do not enter the purified liquid.

Thus, the assigned task and technical result were achieved.

The present description of the invention presents a preferred embodiment of the invention. Changes can be made to it, within the limits of the claimed formula, which makes it possible for it to be widely used.

## Claims

1. A filtration cartridge consisting of a housing filled with a mixture, wherein at the top of the housing there is at least one opening for water inlet, and at the bottom there is at least one opening for water outlet, **characterized in that** said filtration cartridge is designed to reduce the degree of contamination of the purified liquid with foreign particles and particles of filter material, and is equipped with a protective element.

2. The filter module according to claim 1, **characterized in that** the protective element is made in the form of partitions located in an ellipse or in a circle.

3. The filter module according to claim 1, **characterized in that** the partitions can be made of different widths.

4. The filter module according to claim 1, **characterized in that** the partitions can be located at different distances from each other.

5. The filter module according to claim 1, **characterized in that** the distance between the partitions ranges preferably from 0.1 to 2 times the width of the partition.
